# EUROPEAN PATENT SPECIFICATION

(11) **EP 2 884 250 B1**
(45) Date of publication and mention of the grant of the patent: **14.02.2018**
(21) Application number: 13197440.4
(22) Date of filing: 16.12.2013
(51) Int. Cl.: G01K 1/08, G05D 16/00

(54) **Stand-alone pressurizations system**
Eigenständiges Druckausgleichssystem
Système de pressurisation autonome

(43) Date of publication of application: 17.06.2015
(73) Proprietor: ENDRESS + HAUSER WETZER GmbH + Co. KG, 87484 Nesselwang (DE)
(72) Inventor: Palma, Luca, 20080 Zibido San Giacomo (MI) (IT); Pietroni, Michele, 20097 San Donato Milanese (MI) (IT)
(74) Representative: Andres, Angelika Maria

(56) References cited:
- EP-A1- 0 356 593
- WO-A1-2013/021671
- CN-U- 202 064 398
- JP-A- 2002 174 554
- US-A- 5 184 894

## Description

The present invention concerns a stand-alone modular system for pressure compensation and protection of a thermometer, specially a thermowell. The invention also concerns an installation assembly, a kit of parts and a method for providing a pressure compensation.

A very critical issue for measuring devices in reactors for example in Oil&Gas or Chemical Industries is the contamination of the sensitive part of sensors or probes by the gases coming from the process. In order to protect the sensitive part, probes or sensors are usually made by different layers of different materials. Typical classes of materials used are metals and ceramics. Especially at high temperature, aggressive process gases like chlorides, sulphides, hydrocarbons, but also oxygen and hydrogen, can cross the different protective layers and enter into the sensitive part of the probe. This may be due, for example, to the fact that ceramics can become porous at high temperature. This diffusion and/or permeation phenomenon can cause corrosion and can lead to the drifting or loss of measuring point, so it is very important to further protect the inner part of the sensor. For example, in industrial thermometers, the wires of a C-type thermocouples are very sensitive to oxygen and it is necessary to realize a system to scavenge them from it.

Consequently thermocouple failure is a frequent occurrence under the severe conditions encountered e.g. in a reactor.

A thermocouple for use in a hostile environment has hence become known from the patent publication EP356593, where a purge gas stream that flows through a gas conduit inside the thermowell, wherein inside which thermowell the thermocouple is arranged. The flow rate of the purge gas used is controlled so that it is sufficiently high to maintain a critical partial pressure of oxygen and/or sulfur. The flow rate is low enough, however, so that the flow of gas does not introduce measurable error into the measured temperature indication as a result of convective cooling of the thermocouple junction.

Similarly, WO2013/021671A1 introduces an in-furnace temperature measuring device with a protection tube housing a temperature sensor and being movably arranged within a support tube. The gap between the protection tube and support tube is hermetically sealed by a plurality of seal rings, which divide the gap into a plurality of space portions. Furthermore, by means of a gas flowing mechanism may a pressure barrier can be created by causing inert gas with a pressure higher than that within the furnace to flow into the space portions. The gas flowing device includes a supply pipeline system connected to a compressor, a discharge pipeline system connected to a drain chamber, and a pressure control section including control valves and a differential pressure gauge controlling the opening degrees of the control valves.

However such a pressurized installation is dependent upon gas conduits which have to be present in the vicinity of the thermowell or the probe element. Also, this system introduces some of the purge gas into the reactor, which is not desired.

Hence it is a problem within such facilities to provide an easy gas supply and a sufficient protection of a thermocouple or any other sensor arranged inside a thermowell or protective tube whatsoever.

The problem is solved by way of an assembly comprising a thermowell and a stand-alone closed-circuit modular system for pressure compensation of the thermowell and protection of a thermometer and a method for providing a pressure compensation for a thermowell.

Regarding the assembly the problem is solved by way of an assembly comprising a thermowell and a stand-alone closed-circuit modular system for pressure compensation of the thermowell, comprising: a gas container, which gas container is filled with a limited amount of a, preferably inert, gas and which serves as a pressure reservoir for the thermowell, a pressure regulating element, wherein the pressure regulating element is connectable to the thermowell and to the container in a gas tight and pressure tight manner and wherein the pressure regulating element serves for regulating the pressure in the thermowell to a predetermined pressure value.

In an embodiment the modular system serves at least for a limited amount of time for maintaining the pressure inside the thermowell at a constant predetermined pressure value, which is higher than a pressure of a process medium, e.g. in a reactor.

In a further embodiment, the modular system further comprises: a flexible hose, via which hose the pressure regulating element is connectable to the thermowell and which is designed to be a volume reservoir for gas expanding due to an increasing temperature of the gas inside the thermowell or for gas refilling due to pressure loss e.g. caused by material porosity at high temperatures.

In a further embodiment the gas container has a first connector via which the gas container is refillable, wherein the gas container has a second connector via which the gas container is connectable to the pressure regulating element.

In a further embodiment, by way of the gas container and the pressure regulating element a controlled internal pressure in the thermowell is provided, which is higher than a pressure of a process medium, e.g. in a reactor.

In a further embodiment the pressure regulating element comprises a release valve, which serves for diverting process medium as the case may be if process medium has entered the thermowell.

In a further embodiment the gas container is laid out to provide a pressure of at least of the value of the pressure of the process medium, e.g. inside a reactor.

In a further embodiment the volume of the gas container is about the same size as the inner volume of the thermowell.

Regarding the assembly, the hose is at least partially wrapped, preferably at least one time, around the circumference of the thermowell, e.g. in a helical way.

Regarding the kit of parts the problem is solved by a kit of parts comprising: a container, a pressure regulating element, and preferably a flexible hose, according to one of the preceding claims.

Regarding the method the problem is solved by a method for providing a stand-alone closed-circuit pressure compensation for a thermowell, wherein the gas from a gas container, containing a limited amount of gas, is provided via a pressure regulating element to the thermowell as the case may be in order to keep the pressure inside the thermowell at a predetermined level.

In an embodiment of the method the pressure inside the thermowell acts as a barrier in order to avoid contamination of the process media.

In an embodiment of the method the method is used for avoiding contamination of process media of a closed volume, e.g. a thermowell, acting as process barrier.

Further on the method can be used for protecting thermoelements or sensors in general that are inside a reactor.

Still further on the method can be used for contrasting pressure fall due to the thermowell's porosity at a high temperature.

The volume of the gas container is e.g. at the most five times the size or preferably at the most twice the size of the inner volume of the thermowell.

Hence an assembly is provided that is able to protect and extend the working life of measuring probes or sensors that have to be inserted into reactors which process environment may be dangerous or aggressive to the sensitive inner part of the probe.

In order to protect the inner part of these sensors, they are made by different layers of different materials. Typical classes of material used are metals and ceramics. Especially at high temperature, aggressive process gases like chlorides, sulphides, hydrocarbons, but also oxygen and hydrogen, can cross the different protective layers and enter into the sensitive part of the probe. This "diffusion" and/or permeation phenomenon can cause corrosion and can lead to the drifting or loss of measuring point.

The assembly proposed in this patent acts as an autonomous pressurization station able to create a certain gas atmosphere (e.g. inert gases like Argon or Nitrogen) inside the probe as a pressure barrier (counter-pressure) towards the process environment. The system can be considered autonomous in the sense that it is installed on board of the sensor, it is a closed circuit and it is independent from plants utilities. The pressurization system of this invention allows to regulate and control the value of pressure also during working condition of the probe; this is realized by the means of pressure regulator and, for example, by a flexible hose that acts both as an extra-volume to achieve gas expansion at high temperature and as systems connection. In order to overcome leakage problem during the time, the system is designed to allow gas re-filing inside the probe to keep the counter-pressure always at the desired level (usually about 1 or 1,5 bar above process pressure).

The probe, i.e. the thermowell, must be properly designed (in terms of gas path) to be able to let the gas reaching the sensitive part to be protected. Typically, a counter-pressure of inert gas (Argon, Nitrogen) of 1 or 1,5 bar above process pressure is enough to ensure protection. Usually, the protection through inert gas is realized by the means of a fluxing system (open circuit), which involves the consumption of a lot of inert gas and it is strictly linked to plants utilities. In the present invention an autonomous pressurization system (closed circuit) is described that is able to achieve the protection goal independently from plants utilities.

Furthermore, an expansion volume to keep the pressure increase in working condition under a certain limit is foreseen within the invention and even it acts like connection between probe and pressurization station.

The invention is described in more detail in the following figure:

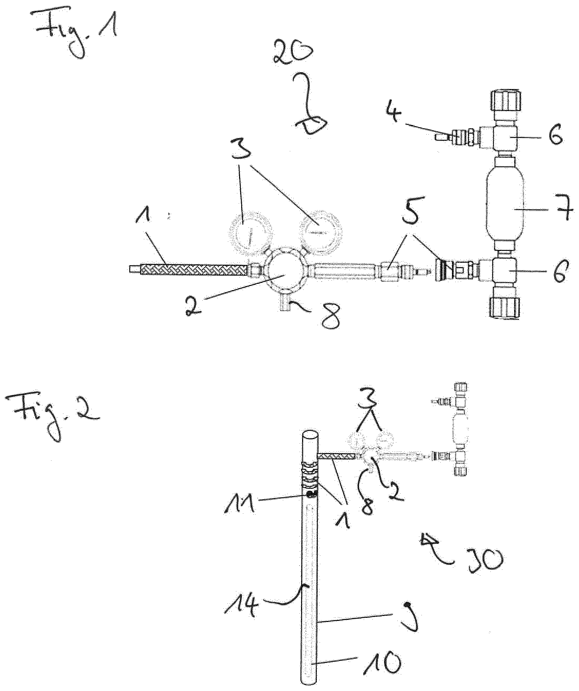

Fig. 1 shows an assembly of an embodiment of the proposed pressurization system, comprising a vessel, quick connectors, valves, a pressure regulator, pressure gauges and a flexible hose,
Fig. 2 shows a view of a second embodiment of the proposed installation example, wherein the flexible hose is wrapped around the sensor, e.g. to save space, and
Fig. 3 shows a schematic representation of a thermometer comprising a thermowell.

The autonomous pressurization system 20 described in the present invention is an assembly of different components which are able to create a pressure (which acts as barrier, counter-pressure, towards process gases) inside a probe 9, to ensure specific maximum allowable pressure (through pressure regulator 2 and an expansion volume 1), to regulate it during working condition (for example through a re-filling of gas in case of some leakage). The system 20 may be considered autonomous in the sense that it is a closed circuit and it is independent from plant utilities.

In order to better explain the layout and the working principle of the invention, below a more detailed description of the components of the system 20 is provided. It is important to highlight here that dimensions and material of these components strictly depend on parameters of the process, for example pressure and temperature.

Quick connectors 4, 5:
- the quick connector 4 in the upper part of gas container 7 allows easy connection to, for example, a gas bottle for the first gas filling and for future (if necessary) refilling;
- the quick connector 5 in the bottom part allows easy connection between gas container 7 and pressure regulator 2.

In general, quick connectors 4, 5 are used to make the assembly as much modular as possible, easy to assemble and disassemble.

Gas container 7:
The gas container serves as a reservoir for pressure and/or gas. According to process condition and foreseen working life of the probe, its pressure rating may vary.

Pressure regulator 2 (with two pressure gauges 3):
It enables the control of the pressure both in gas container side (right in the figure) and in probe side (left side).

The pressure inside the probe 9 may vary for two main reasons:
i) during working condition (for example at high temperature), the gas initially stored in the probe 9 may expand increasing the value of pressure;
ii) some leakage can occur, and it must be counterbalanced by gas release coming from the gas container 7.

So, if the pressure inside the probe 9 is too high, there is the risk to break it; while if the pressure is too low, no barrier effects towards process gases may be realized. Controlling the pressure on the gas container side is important to know how much gas is left in the gas container; is this value is too low, a one-off refilling may be done through the upper quick connector 4.

It is also possible that a device is able to automatically regulate the pressure transferring between container 7 and probe 9, wherein the assembly comprises, preferably consists of, a probe 9 and a flexible hose 1. The pressure regulating element 2 may be, for example, an actuator who controls valves opening and closing.

Flexible hose 1:
A flexible hose 1 is used to reach at the same time two goals:
   - connect the probe 9 to the pressurization system 20; this connection may be realized, for example, by the means of a thread properly foreseen in the probe 9;
   - be an extra volume to let the gas coming from the probe 9 expand due to temperature increase according to process parameters, the extra volume needed to keep the whole pressure under a certain limit may be quite high; so the flexible hose 1 may be quite long. For space-saving reason, it can be wrapped around the probe 9 or sensor.

All the materials chosen for the present invention depend e.g. on thermal and pressure sources coming from process.

Hence according to the invention an autonomous pressurization system 20 to pressurize a probe 9 creating a counter-pressure that opposes to the incoming pollutants agents is proposed. The invention also comprises a system 20 to protect measuring probes 9 and extend their working life, avoiding or slowing corrosion or contamination phenomenon of inner sensitive part. The proposed assembly 30 is also able to regulate and control the pressure during working conditions. The present invention is independent from type or particular geometry of the probe.

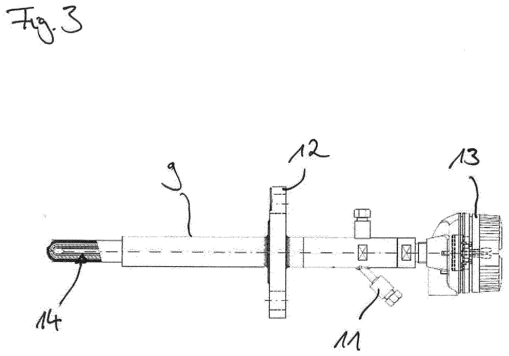

A thermowell 9 as shown figure 3 of a thermometer can e.g. have an inner thermometer volume of about 50 cm³. The flexible hose 1 inner volume can then e.g. be about 100cm³ and the inner volume of the container 7 can e.g. in that case be about 50 to 100 cm³. In that case it can be observed that doubling the container 7 volume, the thermowell 9 refilling frequency does not increase in a significant way. Hence it can be inferred that a ratio of 1:1:1 between the thermowell 9, the hose and the container 7 inner volume is sufficient in order to stay with a pressure threshold of e.g. 5 bar.

During the operation of the thermometer of e.g. five months a thermoelement inside such probe 9 in the form of a protective tube is sufficiently protected from the process medium. This is significantly longer than the currently lifetime of a sensor in an aggressive environment.

The container 7 can e.g. be filled with a pressure of twice the pressure, e.g. 10 bars, for probe 9, e.g. a thermowell, which is pressurized at, e.g. 5 bars, in order to be protected from diffusion of the process medium.

The values provided are only for sake of a practical example, of course other suitable values of pressure, volume etc. can be chosen.

The thermometer and the probe 9 of figure 3 comprises a connector 11 for connection the flexible hose 1 to it. The probe 9 in that case serves for receiving a measuring insert 14. The probe itself can be attached to a wall of e.g. a reactor by way of a process connection 12. Also the thermometer has a terminal head 13 in which electrical connection are located to connect the measuring insert to further conducting elements such as cables. In the terminal head however also some electronic components can be arranged that serve for processing the sensor signal of the measuring insert in order to provide a measurement value.

## Claims

1. An assembly (30) comprising a thermowell (9) and a stand-alone closed-circuit modular system (20) for pressure compensation of the thermowell (9), comprising:
a gas container (7), which gas container (7) is filled with a limited amount of a, preferably inert, gas and which container serves as a pressure reservoir for the thermowell. (9),
a pressure regulating element (2), wherein the pressure regulating element (2) is connectable to the thermowell (9) and to the container (7) in a gas tight and pressure tight manner and wherein the pressure regulating element (2) serves for regulating the pressure in the thermowell (9) to a predetermined pressure value.

2. An assembly (30) according the preceding claim, wherein the modular system (20) is configured to serve at least for a limited amount of time for maintaining the pressure inside the thermowell (9) at a constant predetermined pressure value, which is higher than a threshold pressure value, e.g. of a process medium in a reactor.

3. An assembly (30) according to one of the preceding claims, further comprising:
a flexible hose (1), via which hose (1) the pressure regulating element (2) is connectable to the thermowell (9) and which is designed to be a volume reservoir, e.g. for gas inside the thermowell (9) expanding due to an increasing temperature of the gas inside the thermowell (9).

4. An assembly (30) according to one of the preceding claims, wherein the gas container (7) has a first connector (4) via which the gas container is refillable, wherein the gas container (7) has a second connector (5) via which the gas container (7) is connectable to the pressure regulating element (2).

5. An assembly (30) according to one of the preceding claims, wherein the by way of the gas container (7) and the pressure regulating element (2) a controlled internal pressure in the thermowell (9) is provided, which is higher than a threshold pressure, e.g. pressure of a process medium, e.g. in a reactor.

6. An assembly (30) according to one of the preceding claims, wherein the pressure regulating element (2) comprises a release valve (8), which serves for diverting process medium as the case may be if process medium has entered the thermowell (9).

7. An assembly (30) according to one of the preceding claims, wherein the volume of the gas container is at the most twice the size of the inner volume of the thermowell.

8. An assembly (30) according to one of the preceding claims, wherein the volume of the gas container (7) is about the same size as the inner volume of the thermowell (9).

9. An assembly (30) wherein the hose, (1) is at least partially wrapped, e.g. at least one time, around the circumference of the thermowell 9, e.g. in a helical way.

10. A method for providing a stand- alone closed-circuit pressure compensation for a thermowell (9), wherein
the gas from a gas container (7), containing a limited amount of gas, is provided via a pressure regulating element (2) to the thermowell (9) in order to keep the pressure inside the thermowell (9) at a predetermined level.

11. A method according to the preceding claim, wherein the pressure inside the thermowell (9) acts as a barrier in order to avoid contamination of the process media.

## Patentansprüche

1. Eine Baugruppe (30), umfassend ein Schutzrohr (9) und ein eigenständiges geschlossenes modulares System (20) für den Druckausgleich des Schutzrohrs (9), Folgendes umfassend:
einen Gasbehälter (7), wobei der Gasbehälter (7) mit einer begrenzten Menge an, vorzugsweise inertem, Gas gefüllt ist und wobei der Behälter als ein Druckbehälter für das Schutzrohr (9) dient,
ein druckregulierendes Element (2), wobei das druckregulierende Element (2) am Schutzrohr (9) und am Behälter (7) gasdicht und druckdicht anschließbar ist und wobei das druckregulierende Element (2) zur Regelung des Drucks im Schutzrohr (9) auf einen vordefinierten Druckwert dient.

2. Eine Baugruppe (30) entsprechend dem vorhergehenden Anspruch, wobei das modulare System (20) so ausgeführt ist, dass es dazu dient, den Druck im Schutzrohr (9) mindestens für eine begrenzte Zeit auf einem konstanten vordefinierten Druckwert zu halten, der höher ist als ein Schwellendruckwert, beispielsweise eines Prozessmediums im Reaktor.

3. Eine Baugruppe (30) entsprechend einem der vorhergehenden Ansprüche, die des Weiteren Folgendes umfasst:
einen biegsamen Schlauch (1), wobei über diesen Schlauch (1) das druckregulierende Element (2) am Schutzrohr (9) anschließbar ist und der als Volumenbehälter ausgelegt ist, beispielsweise für Gas im Schutzrohr (9), das sich aufgrund einer ansteigenden Temperatur des Gases im Schutzrohr (9) ausdehnt.

4. Eine Baugruppe (30) entsprechend einem der vorhergehenden Ansprüche, wobei der Gasbehälter (7) über einen ersten Steckverbinder (4) verfügt, über den der Gasbehälter auffüllbar ist, wobei der Gasbehälter (7) über einen zweiten Steckverbinder (5) verfügt, über den der Gasbehälter (7) mit dem druckregulierenden Element (2) verbindbar ist.

5. Eine Baugruppe (30) entsprechend einem der vorhergehenden Ansprüche, wobei über den Gasbehälter (7) und das druckregulierende Element (2) ein kontrollierter Innendruck im Schutzrohr (9) geliefert wird, der höher als ein Schwellendruck ist, beispielsweise der Druck eines Prozessmediums, z. B. in einem Reaktor.

6. Eine Baugruppe (30) entsprechend einem der vorhergehenden Ansprüche, wobei das druckregulierende Element (2) ein Ablassventil (8) umfasst, das gegebenenfalls für die Ableitung von Prozessmedium dient, falls Prozessmedium in das Schutzrohr (9) gelangt ist.

7. Eine Baugruppe (30) entsprechend einem der vorhergehenden Ansprüche, wobei das Volumen des Gasbehälters höchstens der doppelten Größe des Innenvolumens des Schutzrohrs entspricht.

8. Eine Baugruppe (30) entsprechend einem der vorhergehenden Ansprüche, wobei das Volumen des Gasbehälters (7) ungefähr der Größe des Innenvolumens des Schutzrohrs (9) entspricht.

9. Eine Baugruppe (30), wobei der Schlauch (1) mindestens teilweise, z. B. mindestens einmal, um den Umfang des Schutzrohrs 9 gewickelt ist, z. B. spiralförmig.

10. Ein Verfahren zur Lieferung eines eigenständigen geschlossenen Druckausgleichs für ein Schutzrohr (9), wobei das Gas aus einem Gasbehälter (7), der eine begrenzte Menge Gas enthält, über ein druckregulierendes Element (2) zum Schutzrohr (9) geliefert wird, um den Druck im Schutzrohr (12) auf einem vordefinierten Niveau zu halten.

11. Ein Verfahren entsprechend dem vorhergehenden Anspruch, wobei der Druck im Schutzrohr (9) als Sperre dient, um die Kontaminierung der Prozessmedien zu vermeiden.

## Revendications

1. Ensemble (30) comprenant un doigt de gant (9) et un système modulaire à circuit fermé (20) autonome destiné à la compensation de la pression du doigt de gant (9), comprenant :
un conteneur de gaz (7), lequel conteneur de gaz (7) est rempli avec une quantité limitée d'un gaz, de préférence inerte, et lequel conteneur sert de réservoir sous pression pour le doigt de gant (9),
un élément de régulation de pression (2), celui-ci pouvant être connecté au doigt de gant (9) et au conteneur (7) d'une manière étanche au gaz et étanche à la pression, et l'élément de régulation de pression (2) servant à réguler la pression dans le doigt de gant (9) à une valeur de pression prédéterminée.

2. Ensemble (30) selon la revendication précédente, pour lequel le système modulaire (20) est configuré de manière à servir au moins pendant une période de temps limitée à maintenir la pression à l'intérieur du doigt de gant (9) à une valeur de pression constante prédéterminée, qui est supérieure à une valeur de pression seuil, notamment d'un fluide de process dans un réacteur.

3. Ensemble (30) selon l'une des revendications précédentes, comprenant en outre :
un tuyau flexible (1) par l'intermédiaire duquel l'élément de régulation de pression (2) peut être connecté au doigt de gant (9) et qui est conçu de manière à servir de réservoir de volume, notamment pour le gaz à l'intérieur du doit de gant (9) se dilatant en raison d'une augmentation de la température du gaz à l'intérieur du doigt de gant (9).

4. Ensemble (30) selon l'une des revendications précédentes, pour lequel le conteneur de gaz (7) possède un premier raccord (4) par l'intermédiaire duquel le gaz peut être rempli, pour lequel le conteneur de gaz (7) possède un deuxième raccord (5) par l'intermédiaire duquel le conteneur de gaz (7) peut être connecté à un élément de régulation de pression (2).

5. Ensemble (30) selon l'une des revendications précédentes, pour lequel est fournie, au moyen du conteneur de gaz (7) et de l'élément de régulation de pression (2), une pression interne régulée dans le doigt de gant (9), qui est supérieure à une pression seuil, notamment la pression d'un fluide de process, notamment dans un réacteur.

6. Ensemble (30) selon l'une des revendications précédentes, pour lequel l'élément de régulation de pression (2) comprend une vanne de décharge (8), qui sert à détourner le fluide de process dans l'éventualité où du fluide de process a pénétré dans le doigt de gant (9).

7. Ensemble (30) selon l'une des revendications précédentes, pour lequel le volume du conteneur de gaz est au moins égal au double du volume intérieur du doigt de gant (9).

8. Ensemble (30) selon l'une des revendications précédentes, pour lequel le volume du conteneur de gaz est approximativement égal au volume intérieur du doigt de gant (9).

9. Ensemble (30) pour lequel le tuyau flexible (1) est au moins partiellement enveloppé, notamment au moins une fois, autour de la circonférence du doigt de gant (9), notamment de manière hélicoïdale.

10. Méthode destinée à fournir une compensation de pression à circuit fermé autonome pour un doigt de gant (9), pour laquelle
le gaz provenant d'un conteneur de gaz (7), contenant une quantité limitée de gaz, est acheminé via un élément de régulation de pression (2) au doigt de gant (9) afin de maintenir la pression à l'intérieur du doigt de gant (9) à un niveau prédéterminé.

11. Méthode selon la revendication précédente, pour laquelle la pression à l'intérieur du doigt de gant (9) agit en tant que barrière afin d'éviter la contamination des fluides de process.
